(19) **Europäisches Patentamt**

**European Patent Office**

**Office européen des brevets**

(11) **EP 1 097 361 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(21) Anmeldenummer: **99928985.3**

(22) Anmeldetag: **16.07.1999**

(51) Int Cl.⁷: **G01L 21/12**, G01L 9/00

(86) Internationale Anmeldenummer:
**PCT/CH99/00325**

(87) Internationale Veröffentlichungsnummer:
**WO 00/004358 (27.01.2000 Gazette 2000/04)**

(54) **DRUCKMESSZELLE, DRUCKMESSVORRICHTUNG SOWIE VERFAHREN ZUR ÜBERWACHUNG DES DRUCKES IN EINER KAMMER**

PRESSURE-MEASURING CELL, PRESSURE-MEASURING DEVICE AND METHOD FOR MONITORING PRESSURE WITHIN A CHAMBER

CELLULE ET DISPOSITIF DE MESURE DE PRESSION ET PROCEDE POUR SURVEILLER LA PRESSION DANS UNE CHAMBRE

(84) Benannte Vertragsstaaten:
**AT BE CH CY DE DK ES FI FR GB GR IE IT LI LU MC NL PT SE**

(30) Priorität: **16.07.1998 US 116666**

(43) Veröffentlichungstag der Anmeldung:
**09.05.2001 Patentblatt 2001/19**

(73) Patentinhaber: **Unaxis Balzers Aktiengesellschaft**
**9496 Balzers (LI)**

(72) Erfinder:
• **WÄLCHLI, Urs**
**CH-8888 Heiligkreuz (CH)**

• **BJÖRKMAN, Per**
**FIN-22310 Palsböle (FI)**
• **STOCKER, Rudolf**
**CH-9478 Azmoos (CH)**
• **GANTNER, Marcel**
**CH-9476 Weite (CH)**

(74) Vertreter: **Wagner, Wolfgang, Dr. Phil., Dipl.-Phys. c/o Zimmerli, Wagner & Partner AG**
**Löwenstrasse 19**
**8001 Zürich (CH)**

(56) Entgegenhaltungen:
**EP-A- 0 351 701        EP-A- 0 658 755**
**US-A- 3 064 478**

## Beschreibung

### Technisches Gebiet

Die Erfindung betrifft eine Druckmesszelle, eine Druckmessvorrichtung, welche eine solche Druckmesszelle umfasst sowie ein Verfahren zur Ueberwachung des Druckes in einer Kammer mittels einer derartigen Druckmesszelle oder Druckmessvorrichtung.

### Stand der Technik

Es sind gattungsgemässe Druckmesszellen bekannt (s. z. B. EP-A-0 351 701), welche lediglich ein kapazitives Messelement enthalten, bestehend aus einer Trägerplatte und einer Membran, welche elektrisch leitfähige Schichten tragen. Mit derartigen Messelementen kann zwar zwischen ca. $10^{-6}$ mbar und 10 bar gasartunabhängig und mit hoher Genauigkeit gemessen werden, doch kann nicht der gesamte Bereich mit einem einzigen Messelement erfasst werden. Auch sind derartige Druckmesszellen stets mit einem Offsetproblem behaftet, das vor allem längerfristig beträchtliche Ungenauigkeiten verursachen kann.

Es ist auch bekannt, Druckmesszellen einzusetzen, die als Wärmeleitungs-Messelement z. B. nach Pirani ausgebildet sind. Bei derartigen Druckmesszellen wird mindestens ein Heizelement, gewöhnlich ein Messdraht elektrisch geheizt und aus der Heizleistung über die druckabhängige Wärmeleitfähigkeit des Gases der Druck ermittelt. Auf diese Weise kann der Druck in einem Bereich zwischen ca. $10^{-3}$ mbar und einigen 100 mbar gemessen werden. Oberhalb von einigen 10 mbar überwiegt jedoch die konvektive Wärmeübertragung, so dass dort die Messung von Gasströmungen beeinflusst wird und stark lageabhängig ist. Ausserdem ist die Messung nach dieser Methode stets gasartabhängig. Eine Wärmeleitungs-Messzelle einschliesslich ihrer Auswertungsschaltung kann auch so ausgelegt werden, dass sie bis etwa $10^{-5}$ oder maximal $10^{-6}$ mbar betrieben werden kann, doch können dann höhere Drücke oberhalb einigen 10 mbar nicht mehr zuverlässig erfasst werden.

Es ist auch bekannt, für Drücke unter $10^{-2}$ mbar und mit weiter reduzierter Genauigkeit bis $10^{-1}$ mbar sogenannte Ionisations-Messzellen einzusetzen, deren Funktion auf der Messung einer Teilchenstromdichte beruht. Man unterscheidet zwischen Kaltkathoden-Ionisations-Messzellen und solchen mit einer Glühkathode. Sie sind in höheren Druckbereichen nicht funktionsfähig und ab ca. $10^{-2}$ mbar ungenau. Sie sind grundsätzlich gasartabhängig.

Sollen grosse Druckbereiche erfasst werden, beispielsweise von ca. $10^{-6}$ mbar bis ca. 100 mbar, so ist es üblich, mindestens zwei verschiedene, örtlich getrennte Druckmesszellen zu benutzen, welche jeweils auch unabhängig voneinander mit Geräten zur Messignalaufbereitung versehen sind. So können etwa zwei oder mehr Druckmesszellen eingesetzt werden, die jeweils ein zur Erfassung eines Teilbereichs geeignetes kapazitives Messelement der eingangs geschilderten Art enthalten. Diese und ähnliche Lösungen sind jedoch wegen des damit verbundenen technischen Aufwands teuer. Die räumliche Entfernung zwischen den Messelementen kann zu Unsicherheit des Messergebnisses führen. Ausserdem bleibt auch beim Einsatz mehrerer derartiger Messelemente das Offset-Problem bestehen.

Es ist aber auch bekannt, verschiedene Druckmesselemente in einer Vorrichtung zu kombinieren. So ist aus der EP-A-0 658 755 eine Druckmessvorrichtung bekannt, bei welcher ein Wärmeleitungs-Messelement nach Pirani und ein 5 Kaltkathoden-Messelement zu einer Druckmessvorrichtung verbunden sind, wobei das erstere einen oberen und das letztere einen unteren Druckbereich erfasst. Die Vorrichtung ist zwar kompakt und kann den ganzen obengenannten Messbereich erfassen, aber im oberen Teil nur sehr ungenau.

Ebenso ist es bekannt, ein balgartig ausgebildetes mechanisches Messelement mit einem Pirani-artigen Wärmeleitungs-Messelement zu verbinden (US-A-3 064 478). Hier ist die entsprechende Druckmessvorrichtung verhältnismässig unhandlich. Auch kann die räumliche Trennung der Messelemente Unsicherheiten des Messergebnisses hervorrufen.

### Darstellung der Erfindung

Der Erfindung liegt die Aufgabe zugrunde, eine Druckmesszelle anzugeben, die über einen grossen Messbereich verfügt - vorzugsweise von ca. $10^{-6}$ mbar bis zu einigen bar - und zugleich einfach im Aufbau, kompakt und kostengünstig und unempfindlich gegen Kontamination ist. Diese Aufgabe wird durch die Merkmale im Kennzeichen des Anspruchs 1 gelöst.

Ausserdem soll eine Druckmessvorrichtung angegeben werden, die sich durch die gleichen Eigenschaften auszeichnet wie die erfindungsgemässe Druckmesszelle und die einfach, in beliebiger Lage und rasch montierbar ist, ausserdem eine Druckmessvorrichtung, die diese Vorzüge mit einem sehr grossen Messbereich bei hoher Genauigkeit und Stabilität verbindet. Diese Aufgaben werden durch die Merkmale des Anspruchs 14 bzw. 18 gelöst.

Schliesslich soll ein Verfahren zur Ueberwachung des Druckes in einer Kammer angegeben werden, welches über einen grossen Messbereich hinreichend genau und langzeitstabil ist. Diese Aufgabe wird durch die Merkmale des Anspruchs 21 gelöst.

Die erfindungsgemässe Druckmesszelle verbindet in kompakter, leicht handhabbarer und kostengünstig herstellbarer Form ein kapazitives Messelement mit einem Wärmeleitungs-Messelement. Der obere Druckbereich oberhalb ca. 0,1 mbar wird dabei vom gasartunabhängigen kapazitiven Messelement übernommen, der untere Druckbereich von ca. $10^{-6}$ mbar bis ca. 10 mbar vom Wärmeleitungs-Messelement, wobei im Ueberschneidungsbereich z. B. eine Mittelung vorgenommen wird. Dadurch können Drücke zwischen ca. 1 mbar und einigen bar gasartunabhängig und mit hoher Genauigkeit (i. a. ca. 1%) gemessen werden, während zugleich der Messbereich mit im allgemeinen ausreichender Messgenauigkeit bis zu ca. $10^{-6}$ mbar reicht.

Durch die räumliche Nähe der beiden Messelemente ist gewährleistet, dass sie stets den gleichen Bedingungen ausgesetzt sind. Die Druckmesszelle ist vielseitig einsetzbar und kann auch so ausgebildet werden, dass sie im erstgenannten Teil des Messbereichs für Relativdruckmessungen geeignet ist. Die Anordnung ist klein und kompakt aufbaubar, z. B. mit einem Durchmesser von 35 mm oder weniger. Die Wärmeleitungs-Messung betreffend ist im angegebenen Druckbereich mit einem Heizelement kleiner Baugrösse, z. B. einem kurzen Heizfaden optimales Betriebsverhalten realisierbar.

Die erfindungsgemässen Druckmessvorrichtungen weisen die Vorzüge der erfindungsgemässen Druckmesszelle auf und sind handlich und leicht montierbar. Durch passende weitere Messelemente ergänzt, können sie bei kompaktem Aufbau den Druck in einem weiten Messbereich mit hoher Genauigkeit erfassen.

Das erfindungsgemässe Verfahren erlaubt es, den Druck in einer Kammer trotz der Offset-Probleme kapazitiver Messzellen langzeitstabil zu überwachen. Seine vorteilhaften Eigenschaften kommen besonders bei der Ueberwachung des Druckes in Schleusen zum Tragen, da hier wegen der zyklischen Druckänderungen eine Kompensation des Offset regelmässig möglich ist.

**Kurze Beschreibung der Zeichnungen**

Im folgenden wird die Erfindung anhand von Figuren, welche lediglich ein Ausführungsbeispiel darstellen, näher erläutert. Es zeigen

Fig. 1        ein Schaltbild, das schematisch den Aufbau einer erfindungsgemässen Druckmesszelle zeigt,

Fig. 2a       einen axialen Längsschnitt durch eine erfindungsgemässe Druckmessvorrichtung gemäss einer ersten Ausführungsform mit einer Druckmesszelle gemäss einer ersten Ausführungsform,

Fig. 2b       einen Querschnitt längs B-B in Fig. 2a,

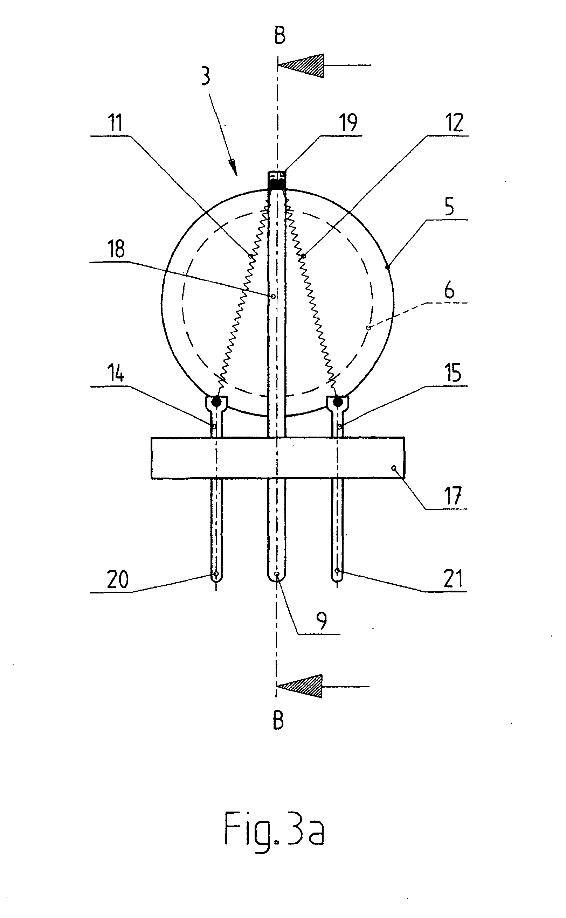

Fig. 3a       eine Seitenansicht einer Druckmesszelle gemäss einer zweiten Ausführungsform,

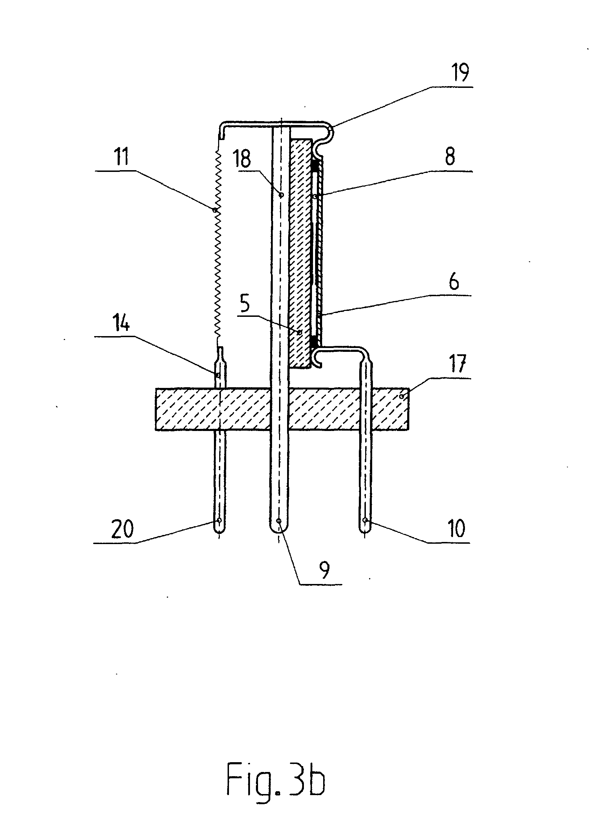

Fig. 3b       einen Längsschnitt längs B-B in Fig. 3a,

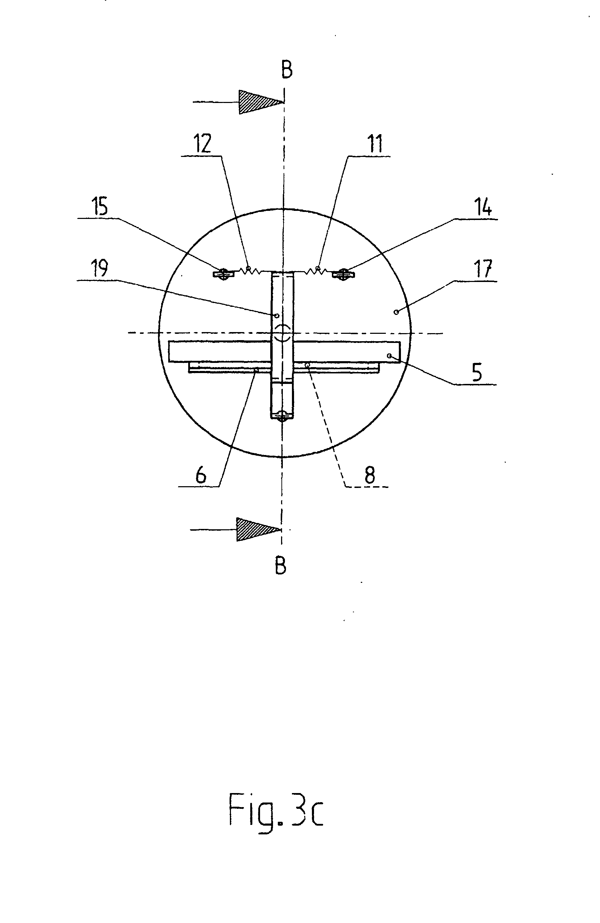

Fig. 3c       eine Draufsicht auf die Druckmesszelle gemäss Fig. 3a,b,

Fig. 4        eine erfindungsgemässe Druckmessvorrichtung gemäss einer zweiten Ausführungsform mit einer Druckmesszelle gemäss der zweiten Ausführungsform,

Fig. 5        eine erfindungsgemässe Druckmessvorrichtung gemäss einer dritten Ausführungsform mit einer Druckmesszelle gemäss der zweiten Ausführungsform,

Fig. 6        eine erfindungsgemässe Druckmessvorrichtung gemäss einer vierten Ausführungsform mit einer Druckmesszelle gemäss der zweiten Ausführungsform,

Fig. 7        schematisch einen Ausschnitt aus einer Vakuumanlage,

Fig. 8a       den Druckverlauf in einer Schleuse der Vakuumanlage von Fig. 7 und

Fig. 8b       den Druckverlauf in einer Zwischenkammer der Vakuumanlage von Fig. 7.

**Wege zur Ausführung der Erfindung**

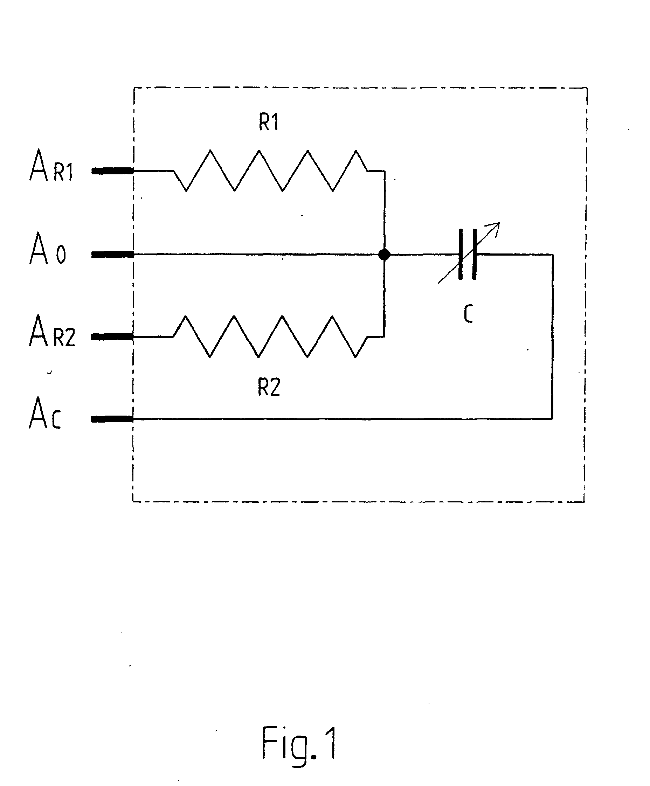

Die erfindungsgemässe Druckmesszelle ist in einem Gefäss oder einer Kammer angeordnet und (Fig. 1) grundsätzlich so aufgebaut, dass zwischen einem Masseanschluss $A_0$ und einem Kapazitätsanschluss $A_C$ ein kapazitives Messelement mit einer Kapazität C angeordnet ist, deren Wert vom Gasdruck abhängt. Ihr Wert wird in bekannter Weise mittels einer geeigneten Auswertungsschaltung überwacht, welche aus ihr ein erstes Drucksignal ableitet. Dabei wird das erste Drucksignal über eine im wesentlichen lineare Kennlinie aus dem ursprünglichen, den Wert der Kapazität C wiedergebenden Wert abgeleitet. Der bei kapazitiven Messelementen gewöhnlich auftretende, die Langzeitstabilität beeinträchtigende Offset kann durch eine weiter unten beschriebene Methode kompensiert werden.

Zwischen dem Masseanschluss $A_0$ und einem ersten Widerstandsanschluss $A_{R1}$ bzw. einem zweiten Widerstandsanschluss $A_{R2}$ sind ein erster Widerstand $R_1$ und ein zweiter Widerstand $R_2$ angeordnet, die Heizelemente eines Wärmeleitungs-Messelements darstellen. Die Widerstände $R_1$, $R_2$ werden durch entsprechende Einstellung bzw. Ueberwachung von Spannung und Strom an den Widerstandsanschlüssen $A_{R1}$ bzw. $A_{R2}$ auf unterschiedliche Temperaturen $T_1$ bzw. $T_2$, denen bestimmte Widerstandswerte entsprechen, stabilisiert und die von ihnen abgegebenen Leistungen gemessen.

Für die durch Wärmeübergang von einem Widerstand an die Wand einer Kammer abgegebene Leistung als Funktion des Gasdrucks p in derselben, der Temperatur T des Widerstands und der Wandtemperatur $T_W$ ergibt sich nach der z. B. aus H. R. Hidber, G. Süss: 'Pirani manometer with linearized response', Rev. Sci. Instrum. 47/8 (1976), 912-914 bekannten Formel

$$(1) \qquad N(p) = \alpha(\varepsilon T^4 - \varepsilon_W T_W^{\ 4}) + (\beta(T-T_W)/\sqrt{T_W}) \times p + \gamma(T-T_W)$$

Dabei erfasst der erste Term den Wärmeübergang durch Strahlung und der letzte denjenigen durch Wärmeleitung im Bereich der Anschlüsse des Widerstands, während der mittlere Term für einen hier vor allem interessierenden Bereich von Drücken unter 10 mbar den durch die druckabhängige Wärmeleitung durch das Gas verursachten Wärmeübergang beschreibt. Bei Verwendung einer etwas komplizierteren Formel für die Abhängigkeit dieses Terms vom Druck, welche auch die Sättigung bei höheren Drücken berücksichtigt, kann dieses Verfahren ohne wesentliche Aenderungen auch auf einen wesentlich grösseren Druckbereich angewandt werden.

Wird N(p) bei den zwei unterschiedlichen Temperaturen $T_1$ und $T_2$, auf die die Widerstände $R_1$, $R_2$ stabilisiert wurden, gemessen und die Differenz gebildet, so ergibt sich

$$(2) \qquad N_1(p)-N_2(p) = \alpha\varepsilon(T_1^{\ 4}-T_2^{\ 4}) + (\beta(T_1-T_2)/\sqrt{T_W}) \times p + \gamma(T_1-T_2)$$

$\alpha$, $\varepsilon$, $\beta$ und $\gamma$ sind Konstanten. Die Gleichung lässt sich zusammenfassen zu

$$(3) \qquad N_1-N_2 = A + B \times p/\sqrt{T_W}$$

mit Konstanten A, B. Die Wandtemperatur ist nur noch in der Wurzel $\sqrt{T_W}$ enthalten, während die stark von der Wandtemperatur abhängigen, höhere Potenzen derselben enthaltenden Terme aus (1) in (3) wegfallen.

Definiert man einen die sogenannte thermische Transpiration (vgl. dazu K. F. Poulter et al., Vacuum 33 (1983), 311 und W. Jitschin et al., J. Vac. Sci. Technol. A5 (1987), 372) bereits enthaltenden normierten Druck P zu

$$(4) \qquad P = p \times \sqrt{(T_{W0}/T_W)},$$

der z. B. bei $T_{W0} = 300°K$ mit dem Druck p übereinstimmt, so ergibt sich derselbe zu

$$(5) \quad P = (N_1-N_2-A)/K$$

wobei K ebenfalls eine Konstante ist. P ist also von der Wandtemperatur unabhängig. Aus den Spannungen und Strömen an den Widerstandsanschlüssen $A_{R1}$, $A_{R2}$ wird gemäss (5) von der Auswertungseinheit ein zweites Drucksignal abgeleitet.

Die Auswertungseinheit erzeugt aus dem vom kapazitiven Messelement stammenden ersten Drucksignal und dem vom Wärmeleitungs-Messelement stammenden zweiten Drucksignal ein Ausgangssignal, welches jeweils eindeutig einem bestimmten Messergebnis der Druckmesszelle entspricht. In einem oberen Teil des Messbereichs wird das Ausgangssignal aufgrund des vom kapazitiven Messelement stammenden ersten Drucksignals ermittelt, in einem unteren Teil desselben aufgrund des vom Wärmeleitungs-Messelements stammenden zweiten Drucksignals. Der Uebergang kann sprungartig bei einem Uebergangswert erfolgen, was jedoch leicht zu Sprüngen des Messwertes und Hystereseeffekten führen kann. Vorzugsweise erfolgt er in einem Uebergangsintervall, z. B. zwischen 0,1 mbar und 10 mbar stetig, insbesondere entsprechend der in EP-A-658 755 geschilderten Methode.

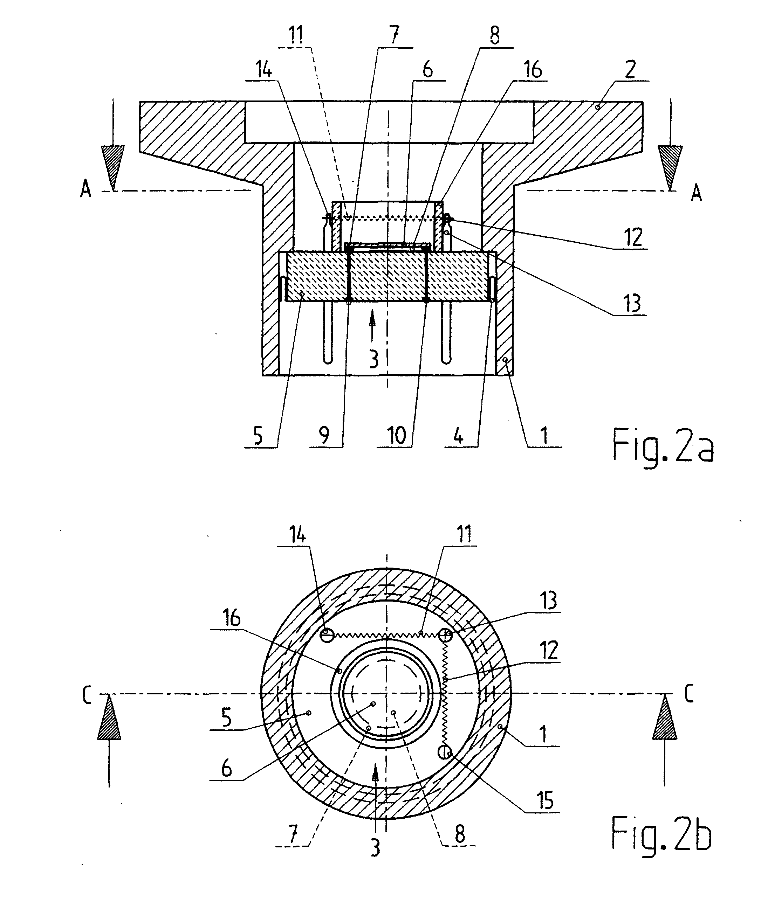

Eine erfindungsgemässe Druckmessvorrichtung gemäss einer ersten Ausführungsform ist in Fig. 2a,b dargestellt. Am Ende eines Schutzrohres 1 mit einem Flansch 2, durch welchen das Schutzrohr 1 an einen entsprechenden Anschluss einer Kammer anschliessbar ist, ist eine Druckmesszelle 3 gemäss einer ersten Ausführungsform mittels einer ringförmigen elastischen Feder 4 elastisch und gasdicht aufgehängt. Die Feder 4 ist unmittelbar mit einer Trägerplatte 5 der Druckmesszelle 3, die zugleich die Funktion eines Grundkörpers erfüllt, hartverlötet und mit dem Schutzrohr 1 verschweisst. Sie gleicht die unterschiedlichen Wärmedehnungen des aus Stahl hergestellten Schutzrohres 1 und der Trägerplatte 5 aus, die vorzugsweise aus einer Keramik mit mindestens 95% $Al_2O_3$ besteht.

An der gegen das Innere des Schutzrohres 1 weisenden inneren Oberfläche der Trägerplatte 5 ist eine Membran 6 angebracht, welche durch eine umlaufende Glasdichtung 7 mit der Trägerplatte 5 gasdicht verbunden und zugleich von ihr beabstandet ist, so dass sie mit derselben ein Referenzvakuum 8 einschliesst, welches gegettert sein kann. Die Membran 6 ist vorzugsweise aus einer Keramik hergestellt, die bevorzugt $Al_2O_3$ enthält oder überwiegend daraus besteht. Ihre Dicke liegt vorzugsweise zwischen 10 $\mu$m und 1'000 um, insbesondere zwischen 10 $\mu$m und 250 $\mu$m. Ihr Durchmesser liegt vorzugsweise zwischen 2 mm und 15 mm, insbesondere zwischen 4 mm und 9 mm.

Die einander gegenüberliegenden Oberflächen der Trägerplatte 5 und der Membran 6 tragen jeweils eine elektrisch leitende Schicht, welche durch die Trägerplatte 5 hindurch mit einem Anschluss 9, welcher dem Masseanschluss $A_0$ entspricht bzw. einem Anschluss 10, welcher dem Kapazitätsanschluss $A_C$ entspricht, an deren Aussenseite verbunden ist. Die Trägerplatte 5 und die mit ihr verbundene Membran 6 bilden also das kapazitive Messelement, mit den besagten elektrisch leitenden Schichten als Kapazität C. Bei der bevorzugten Ausbildung der Trägerplatte 5 und der Membran 6 aus Keramik ist das von denselben gebildete kapazitive Messelement auch in korrosiver Atmosphäre beständig.

Zusätzlich sind zwei neben der Membran 6 angeordnete Heizelemente vorgesehen, welche die elektrischen Widerstände $R_1$, $R_2$ darstellen und somit das Wärmeleitungs-Messelement bilden. Sie sind als Messdrähte 11, 12 ausgebildet, die in etwas grösserem Abstand als die Membran 6 parallel zur inneren Oberfläche der Trägerplatte 5 von einer mittleren Halterung 13, die mit dem Anschluss 9 elektrisch leitend verbunden ist, ausgehend etwa im rechten Winkel zu Halterungen 14; 15 auseinanderlaufen. Sie sind vorzugsweise aus Nickel, Platin oder Wolfram oder einer mindestens eines dieser Metalle enthaltenden Legierung hergestellt, so dass sie selbst aggressiven Gasen gegenüber korrosionsfest sind. Die Halterungen sind durch die Trägerplatte 5 hindurch mit weiteren, den Widerstandsanschlüssen $A_{R1}$, $A_{R2}$ entsprechenden Anschlüssen (hier nicht dargestellt) verbunden. Die Membran 6 ist von einem Schutzring 16, z. B. aus Keramik, umgeben, welcher sie vor der von den Messdrähten 11 und 12 ausgehenden Licht- und Wärmestrahlung schützt und verhindert, dass sie erwärmt und dadurch der mittlere Abstand zwischen den elektrisch leitenden Schichten und damit der Wert der Kapazität C beeinflusst wird.

Im oberen Teil des Messbereichs, von ca. 0,1 mbar bis ca. 10 bar, wird, wie bereits erläutert, das Messergebnis ganz oder teilweise vom Wert der Kapazität C abgeleitet, welche von den durch das Referenzvakuum 8 getrennten elektrisch leitenden Schichten auf der Trägerplatte 5 und der Membran 6 gebildet wird. Dieser Wert hängt von der Durchbiegung der Membran 6 ab, die wiederum eine Funktion des Drucks ist. Unterhalb der unteren Bereichsgrenze wird der Einfluss des Drucks auf die Durchbiegung der Membran 6 so gering, dass Aenderungen derselben nicht mehr mit ausreichender Genauigkeit feststellbar sind. Daher wird im unteren Teil des Messbereichs, von ca. $10^{-6}$ mbar bis ca. 10 mbar, das Messergebnis ganz oder teilweise nach dem Pirani-Prinzip aus den von den Messdrähten 11, 12 abgegebenen Leistungen abgeleitet. Dieses Messprinzip liefert unterhalb von ca. 50 mbar, insbesondere unterhalb von ca. 30 mbar verhältnismässig genaue Messergebnisse.

Es sind natürlich verschiedene Abwandlungen der geschilderten Druckmesszelle möglich. So kann etwa die Grenze zwischen dem unteren und dem oberen Bereich - insbesondere abhängig von der Ausbildung der Membran - anders angesetzt werden. Die Pirani-Druckmessung kann auch mit nur einem Heizdraht durchgeführt werden, der abwechselnd auf die unterschiedlichen Temperaturen $T_1$, $T_2$ gebracht wird oder auch lediglich auf einer Temperatur arbeitet. In letzterem Fall sind allerdings stärkere Einflüsse der Wandtemperatur zu berücksichtigen. Zum Teil können auch, abhängig vom Einsatzgebiet, andere als die angegebenen Materialien verwendet werden oder statt eines Messdrahtes auch ein anderes Widerstandsheizelement, z. B. ein Band, eine Dünnfilmanordnung, ein Mikrochip oder ein mikrotechnisch hergestelltes Pirani-Element auf einem Si-Wafer.

Die Trägerplatte kann kleiner sein und auf einem vorzugsweise ebenfalls aus Keramik bestehenden Grundkörper, vorzugsweise einer Grundplatte grösseren Durchmessers montiert sein, durch welche die elektrischen Anschlüsse geführt sind. Das Schutzrohr der Druckmessvorrichtung ist dann durch die Grundplatte verschlossen. Schliesslich kann die Druckmesszelle auch so ausgebildet sein, dass sie im oberen Teil des Messbereichs für Relativmessungen geeignet ist, indem eine Bohrung durch die Trägerplatte geführt ist, welche in das zwischen derselben und der Membran liegende, in diesem Fall nicht als Referenzvakuum ausgebildete Volumen mündet.

Gemäss einer zweiten Ausführungsform weist die Druckmesszelle, die grundsätzlich gleich aufgebaut ist wie gemäss der ersten Ausführungsform und dem in Fig. 1 dargestellten Schaltbild entspricht, einen separaten Grundkörper, genauer eine Grundplatte 17 auf, welche vorzugsweise aus Keramik oder einem anderen elektrisch isolierenden Material besteht. Das kapazitive Messelement mit der Trägerplatte 5 und der Membran 6 ist senkrecht zur Grundplatte 17 ausgerichtet, welche z. B. wie gemäss der ersten Ausführungsform in einem Schutzrohr aufgehängt oder sonstwie angebracht sein kann.

Die Verbindung zwischen der Grundplatte 17 und der Trägerplatte 5 ist durch einen Stift 18 hergestellt, der zentral durch die Grundplatte 17 durchgeführt und in ihr verankert ist. Die Rückseite der Trägerplatte 5 ist so an ihm befestigt, dass er längs eines Durchmessers an ihr anliegt. Zugleich ist er über eine Lasche 19 mit der elektrisch leitenden Schicht auf derselben verbunden. Sein durch die Grundplatte 17 ragender Abschnitt bildet den Anschluss 9, welcher dem Masseanschluss $A_0$ entspricht. Die elektrisch leitende Schicht auf der Membran 6 ist mittels eines durch die Grundplatte 17 durchgeführten Anschlussstiftes mit dem Anschluss 10, welcher dem Kapazitätsanschluss $A_C$ entspricht, verbunden.

Die Messdrähte 11, 12 sind an der von der Membran 6 abgewandten Seite der Trägerplatte 5 angeordnet, so dass diese die Membran 6 vor thermischen Einwirkungen derselben schützt. Sie erstrecken sich jeweils von einem Ende der Lasche 19, über welche sie mit dem Stift 18 elektrisch leitend verbunden sind, schräg auseinanderlaufend gegen die Grundplatte 17, wo sie mit den Halterungen 14, 15 verbunden sind. Diese sind hier als durch die Grundplatte 17 hindurchgeführte Anschlussstifte ausgebildet, die den Widerstandsanschlüssen $A_{R1}$, $A_{R2}$ entsprechende Anschlüsse 20, 21 bilden.

Auch hier sind natürlich Abwandlungen möglich, z. B. betreffend die Ausrichtung der Trägerplatte und die Anbringung der Messdrähte. Sollen Relativmessungen durchgeführt werden, so kann auf der Rückseite der Grundplatte ein weiteres kapazitives Messelement angebracht sein Wesentlich ist bei allen Ausführungen, dass die Messdrähte zwar in der Nähe der Membran angebracht sind, so dass sie auch dann, wenn Druckgradienten auftreten, nicht unterschiedlichen Drücken ausgesetzt sind, andererseits aber nicht in störender Weise thermisch auf die Membran einwirken. Aus diesem Grund sollten die Abstände zwischen der Membran und den Messdrähten nicht grösser als 5 mm, aber auch nicht kleiner als 2 µm sind. Auch eine Abschirmung, wie sie gemäss der ersten Ausführungsform durch den Schutzring 16 und gemäss der zweiten Ausführungsform durch die Trägerplatte 5 selbst gegeben ist, ist von Vorteil.

Erfindungsgemässe Druckmesszellen eignen sich dank ihrer Kompaktheit auch sehr gut als Bestandteil von für spezielle Zwecke bestimmten Druckmessvorrichtungen, die, z. B. zur Erweiterung des Messbereichs nach unten oder Verbesserung der Genauigkeit oder Stabilität bei tiefen Drücken, noch ein weiteres Messelement enthalten. Die Druckmesszelle ist dann gegebenenfalls jeweils gemeinsam mit dem weiteren Messelement im Schutzrohr 1 angeordnet.

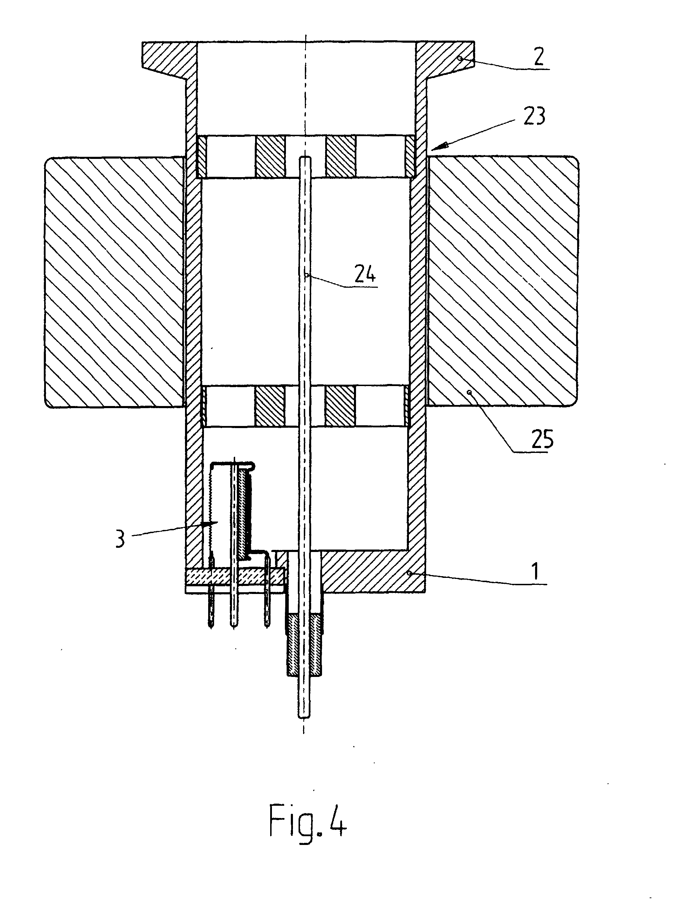

So ist gemäss einer ersten derartigen Ausführungsform einer Druckmessvorrichtung (Fig. 4) im Schutzrohr 1 ein Magnetron 23, also ein Kaltkathoden-Messelement von an sich bekanntem Aufbau angeordnet, mit einem Stift 24 und einem das Schutzrohr 1 koaxial umgebenden Permanentmagneten 25. Am dem offenen Ende des Schutzrohres 1 gegenüberliegenden Ende ist neben der Durchführung für den Stift 24 eine Oeffnung freigelassen, welche durch die Grundplatte 17 der Druckmesszelle 3, die der zweiten oben beschriebenen Ausführungsform entspricht, verschlossen wird. Eine solche Druckmessvorrichtung weist eine hohe Genauigkeit und gute Langzeitstabilität bei tiefen Drücken auf und eignet sich z. B. für den Einsatz in Kammern zur Beschichtung von Festplatten.

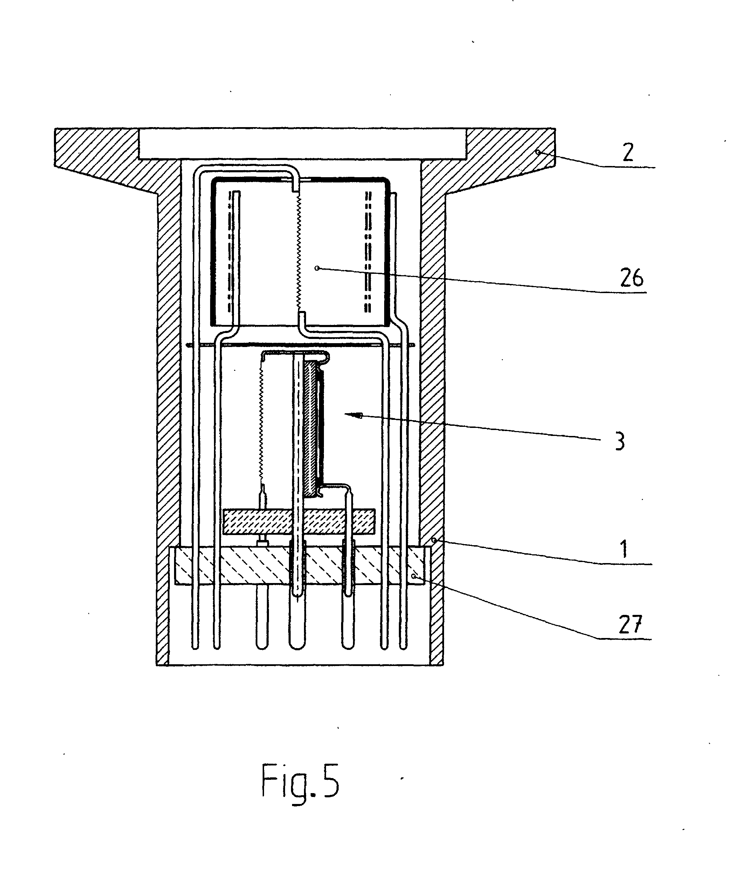

Eine weitere Druckmessvorrichtung (Fig. 5) weist neben der Druckmesszelle 3, die wiederum der zweiten beschriebenen Ausführungsform entspricht, eine Triode 26, also ein Glühkathoden-Messelement auf. Die Druckmesszelle 3 und die Triode 26 sind auf einer gemeinsamen Halterungsplatte 27 aus Keramik oder einem anderen elektrisch isolierenden Material montiert, welche das Schutzrohr 1 an einem Ende verschliesst und durch welche hindurch die Anschlüsse beider durchgeführt sind. Die Triode 26 ist gegen das vom Flansch 2 umgebene offene Ende des Druckrohres 1 hin versetzt, also der Druckmesszelle 3 vorgeordnet. Durch die Triode 26 ist die Druckmessvorrichtung im Bereich zwischen $10^{-1}$ mbar bis $10^{-5}$ oder $10^{-6}$ mbar genau und sehr langzeitstabil. Die Triode 26 ist auch mechanisch robust. Die Druckmessvorrichtung ist z. B. für den Einsatz in Kammern für die Werkzeugbeschichtung, die gewöhnlich keine vorgelagerten Schleusen aufweisen, geeignet.

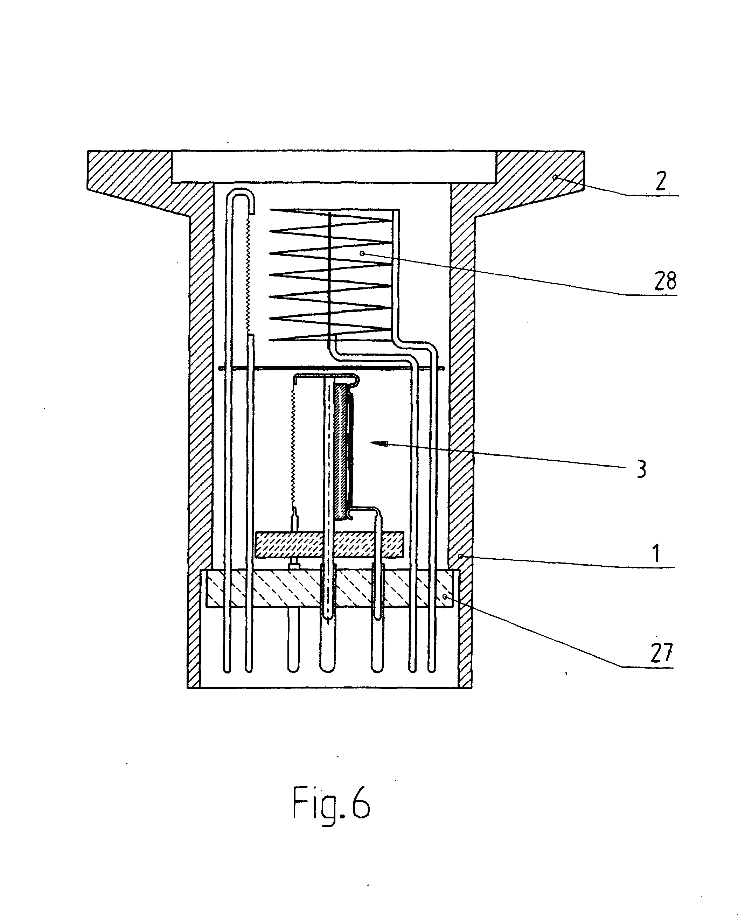

Eine weitere, im übrigen weitgehend gleich aufgebaute Druckmessvorrichtung (Fig. 6) weist als Glühkathoden-Messelement ein Bayard-Alpert-Element 28 auf, das sich durch verhältnismässig hohe Robustheit gegen Verschmutzung auszeichnet.

In jedem Fall liefert das weitere Messelement ein zusätzliches Drucksignal, das ebenfalls der Auswertungseinheit zugeleitet wird und dort der Bestimmung des Ausgangssignals für einen bestimmten Teilbereich des Messbereichs zugrundegelegt werden kann. Der Uebergang kann ebenfalls sprungartig oder durch stetige Ueberlagerung erfolgen.

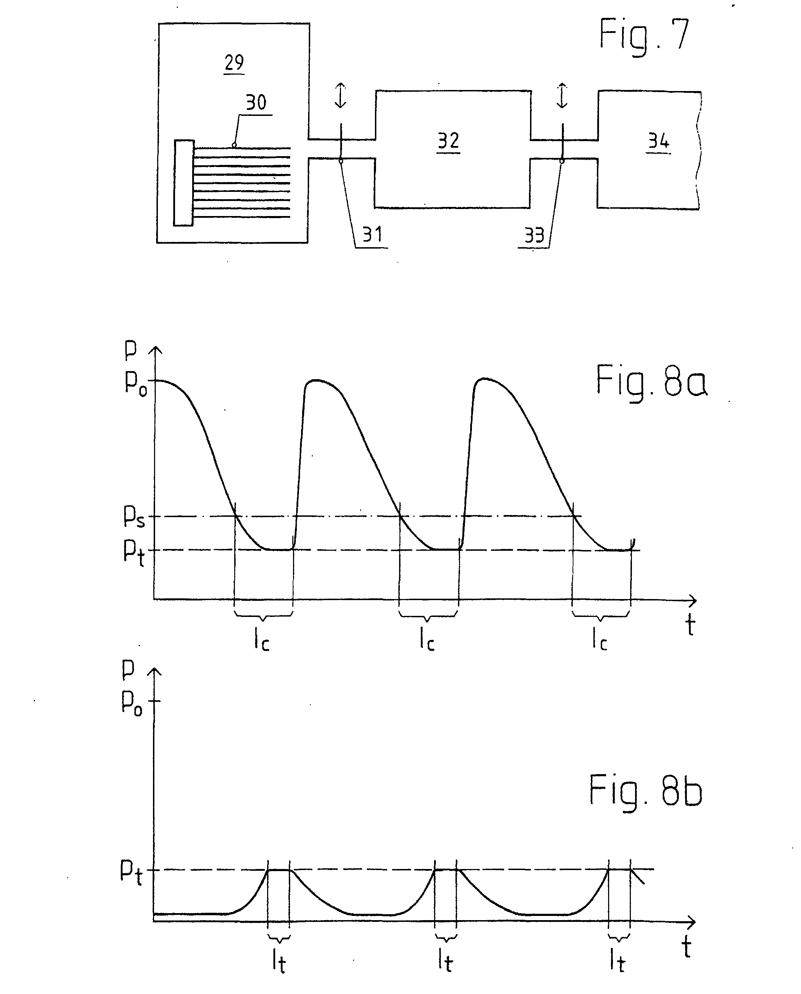

Die vorteilhaften Eigenschaften erfindungsgemässer Druckmesszellen oder sie umfassender Druckmessanordnungen können noch verbessert werden, wenn der die Langzeitstabilität beeinträchtigende Offset des kapazitiven Messelements öfters kompensiert wird. Bei der Ueberwachung des Drucks in Kammern, wo derselbe zyklisch verändert wird, kann dies regelmässig erfolgen, so z. B. in einer Schleuse 29 einer Vakuumanlage (Fig. 7), in welche von aussen, also unter Atmosphärendruck $p_0$ (Fig. 8a) Gegenstände, z. B. zu bearbeitende Wafer 30 o. ä. eingeführt werden, worauf nach Schliessen der Schleuse 29 der Druck p bis auf einen Transferdruck $p_t$ abgesenkt wird, der einige 10 mbar betragen oder auch wesentlich tiefer, z. B. bei etwa $10^{-4}$ mbar liegen kann. Anschliessend wird ein Ventil 31 geöffnet und während eines Transferintervalls $I_t$ (Fig. 8b) die besagten Wafer 30 in eine Zwischenkammer 32 weitertransportiert, wo vorgängig der Druck auf den Transferdruck $p_t$ angehoben wurde. Nach Schliessen des Ventils 31 wird in der Schleuse 29 der Druck p wieder auf den Atmosphärendruck $p_0$ angehoben, während er in der Zwischenkammer 32 abgesenkt wird und die Wafer 30 durch ein weiteres Ventil 33 z. B. in eine Bearbeitungskammer 34 weitertransportiert werden.

Es ist dabei sehr wichtig, dass die Schleuse 29 stets erst geöffnet wird, wenn der Druck in derselben sich dem Atmosphärendruck $p_0$ weitgehend - abhängig von der Empfindlichkeit der zu bearbeitenden Gegenstände meist aufzwischen 2% und 5% - angenähert hat, da sonst störende Strömungen entstehen und die Ventile stark belastet werden, was zu Abrieb und entsprechenden Verunreinigungen führen kann. Dabei kann jedoch die mangelnde Langzeitstabilität durch einen Offset beim im oberen Druckbereich eingesetzten kapazitiven Messelement, das sonst über eine ausgezeichnete Genauigkeit verfügt, problematisch sein.

Dieses Problem wird durch eine Kompensation des Offset, sobald der Messwert unter einen Schwellwert $p_s$ fällt, welcher in der Regel nicht höher als 100 mbar, vorzugsweise nicht höher als 50 mbar oder sogar 30 mbar ist, gelöst. In diesem Fall wird das von der Auswertungsschaltung aus dem ersten Drucksignal ermittelte Ausgangssignal mit einem von derselben aus dem zweiten Drucksignal ermittelten verglichen. Tritt eine durch Offset verursachte Abweichung auf, wird die Kennlinie, die zur Ableitung des ersten Drucksignals herangezogen wird, derart verschoben, dass das von ihr abgeleitete Ausgangssignal mit dem vom zweiten Drucksignal abgeleiteten Ausgangssignal übereinstimmt. Dies wird in Abständen oder stetig wiederholt, solange der Druck p weiter sinkt. Beginnt er wieder zu steigen, wird der Vorgang abgebrochen. Die Kompensation des Offset erfolgt somit innerhalb eines Kalibrierintervalls $I_C$ (Fig. 8a).

Liegt der tiefste in der Schleuse 29 erreichte Druck z. B. bei 5 mbar, so ist die Abweichung des Messergebnisses nach der Wärmeleitungs-Messung vom tatsächlichen Druck in der Regel nicht grösser als ca. 20%, also 1 mbar. Der Offset des kapazitiven Messelements kann also auf ca. 1 mbar genau bestimmt werden. Wegen der im übrigen sehr hohen Genauigkeit des kapazitiven Messelements liegt dann seine Messgenauigkeit in seinem Messbereich ebenfalls bei ca. 1 mbar, was bei Atmosphärendruck eine Abweichung von 0,1% ergibt. Diese Genauigkeit ist in der Regel bei weitem ausreichend. Werden in der Schleuse 29 tiefere Drücke erreicht, ist das Resultat sogar noch besser. Wird unter Einsatz eines ausserhalb der Schleuse liegenden zweiten kapazitiven Messelements eine Relativmessung durchgeführt, was wegen Schwankungen des Aussendrucks oft günstig ist, so kann dessen Ausgangssignal jeweils bei offener Schleuse mit dem des anderen abgeglichen und sein Offset auf diese Weise ebenfalls kompensiert werden.

**Bezugszeichenliste**

| | |
|---|---|
| 1 | Schutzrohr |
| 2 | Flansch |
| 3 | Druckmesszelle |
| 4 | Feder |
| 5 | Trägerplatte |
| 6 | Membran |
| 7 | Glasdichtung |
| 8 | Referenzvakuum |
| 9, 10 | Anschlüsse |
| 11, 12 | Messdrähte |
| 13 - 15 | Halterung |
| 16 | Schutzring |
| 17 | Grundplatte |
| 18 | Stift |
| 19 | Lasche |
| 20, 21 | Anschlüsse |

| 23 | Magnetron |
| 24 | Stift |
| 25 | Permanentmagnet |
| 26 | Triode |
| 27 | Halterungsplatte |
| 28 | Bayard-Alpert-Element |
| 29 | Schleuse |
| 30 | Wafer |
| 31 | Ventil |
| 32 | Zwischenkammer |
| 33 | Ventil |
| 34 | Bearbeitungskammer |

**Patentansprüche**

1. Druckmesszelle mit einem kapazitiven Messelement, welches eine Trägerplatte (5) und eine ihr mit Abstand vorgeordnete, gasdicht mit ihr verbundene Membran (6) aus Keramik umfasst, welche mit elektrisch leitenden Schichten versehen sind, **dadurch gekennzeichnet, dass** sie ein Wärmeleitungs-Messelement mit mindestens einem Heizelement aufweist, welches mit der Trägerplatte (5) unmittelbar oder über einen beide Messelemente tragenden Grundkörper verbunden ist, wobei die Membran (6) gegen von dem mindestens einen Heizelement ausgehende Strahlung abgeschirmt ist.

2. Druckmesszelle nach Anspruch 1, **dadurch gekennzeichnet, dass** dass der Abstand zwischen der Membran (6) und dem mindestens einen Heizelement höchstens 5 mm beträgt.

3. Druckmesszelle nach Anspruch 1 oder 2, **dadurch gekennzeichnet, dass** die Membran (6) aus einer Keramik besteht, die insbesondere $Al_2O_3$ enthält, und ihre Dicke zwischen 10 µm und 1'000 µm, insbesondere zwischen 10 µm und 250 µm, beträgt.

4. Druckmesszelle nach einem der Ansprüche 1 bis 3, **dadurch gekennzeichnet, dass** der Durchmesser der Membran (6) zwischen 2 mm und 15 mm, vorzugsweise zwischen 4 mm und 9 mm beträgt.

5. Druckmesszelle nach einem der Ansprüche 1 bis 4, **dadurch gekennzeichnet, dass** zwischen der Trägerplatte (5) und der Membran (6) ein gegettertes Referenzvakuum (8) eingeschlossen ist.

6. Druckmesszelle nach einem der Ansprüche 1 bis 5, **dadurch gekennzeichnet, dass** das Heizelement jeweils als Messdraht (11, 12), als Band, als Dünnfilmanordnung oder als Mikrochip ausgebildet ist.

7. Druckmesszelle nach einem der Ansprüche 1 bis 6, **dadurch gekennzeichnet, dass** sie mindestens zwei unabhängig voneinander heizbare Heizelemente aufweist.

8. Druckmesszelle nach einem der Ansprüche 1 bis 7, **dadurch gekennzeichnet, dass** das mindestens eine Heizelement mindestens 1% Nickel, Platin oder Wolfram enthält.

9. Druckmesszelle nach einem der Ansprüche 1 bis 8, **dadurch gekennzeichnet, dass** sich das mindestens eine Heizelement mit Abstand parallel zur Trägerplatte (5) erstreckt.

10. Druckmesszelle nach einem der Ansprüche 1 bis 9, **dadurch gekennzeichnet, dass** das mindestens eine Heizelement mit grösserem Abstand von der Trägerplatte (5) als dieselbe neben der Membran (6) angeordnet ist.

11. Druckmesszelle nach einem der Ansprüche 1 bis 10, **dadurch gekennzeichnet, dass** die Membran (6) zur Abschirmung von einem an der Trägerplatte (5) angeordneten Schutzring (16) umgeben ist, ausserhalb dessen das mindestens eine Heizelement angeordnet ist.

12. Druckmesszelle nach einem der Ansprüche 1 bis 10, **dadurch gekennzeichnet, dass** das mindestens eine Heizelement an der von der Membran (6) abgewandten Seite der Trägerplatte (5) angeordnet ist.

**13.** Druckmesszelle nach einem der Ansprüche 1 bis 12, **dadurch gekennzeichnet, dass** die Trägerplatte (5) an einem Stift (18), der durch einen vorzugsweise als Grundplatte (17) ausgebildeten Grundkörper geführt ist, etwa senkrecht zu letzterem befestigt ist.

**14.** Druckmessvorrichtung mit einer Druckmesszelle (3) nach einem der Ansprüche 1 bis 13, **dadurch gekennzeichnet, dass** sie ein Schutzrohr (1) umfasst, welches die Druckmesszelle (3) umgibt.

**15.** Druckmessvorrichtung nach Anspruch 14, **dadurch gekennzeichnet, dass** das Schutzrohr (1) an einem Ende durch die Trägerplatte (5) verschlossen ist.

**16.** Druckmessvorrichtung nach Anspruch 15, **dadurch gekennzeichnet, dass** die Trägerplatte (5) federnd und dichtend im Schutzrohr (1) aufgehängt ist.

**17.** Druckmessvorrichtung nach einem der Ansprüche 14 bis 16, **dadurch gekennzeichnet, dass** die Druckmesszelle (3) gemeinsam mit mindestens einem weiteren Messelement zur Druckmessung im Schutzrohr (1) angeordnet ist.

**18.** Druckmessvorrichtung mit einer Druckmesszelle (3) nach einem der Ansprüche 1 bis 13, **dadurch gekennzeichnet, dass** sie gemeinsam mit mindestens einem weiteren Druckmesselement auf einer gemeinsamen Halterung angeordnet ist.

**19.** Druckmessvorrichtung nach Anspruch 17 oder 18, **dadurch gekennzeichnet, dass** es sich bei dem mindestens einen weiteren Messelement um ein Kaltkathodenelement handelt.

**20.** Druckmessvorrichtung nach Anspruch 17 oder 18, **dadurch gekennzeichnet, dass** es sich bei dem mindestens einen weiteren Druckmesselement um ein Glühkathodenelement, insbesondere um eine Triode (26) oder um ein Bayard-Alpert-Element (28), handelt.

**21.** Verfahren zum Ueberwachen des Druckes in einer Kammer mittels einer Druckmesszelle nach einem der Ansprüche 1 bis 13 oder einer Druckmessvorrichtung nach einem der Ansprüche 14 bis 20, **dadurch gekennzeichnet, dass** jeweils ein das Messergebnis wiedergebendes Ausgangssignal erzeugt wird, das mindestens dann, wenn das Messergebnis oberhalb eines Uebergangswertes oder Uebergangsbereiches liegt, aufgrund eines vom kapazitiven Messelement stammenden ersten Drucksignal bestimmt wird und, wenn der Druck einen Schwellwert ($p_s$) unterschreitet, jeweils ein allfälliger Offset des ersten Drucksignals derart kompensiert wird, dass die Bestimmung des Ausgangssignals aufgrund des ersten Drucksignals zum gleichen Ergebnis führt wie seine Bestimmung aufgrund eines zweiten Drucksignals, welches vom Wärmeleitungs-Messelement stammt.

**22.** Verfahren nach Anspruch 21, **dadurch gekennzeichnet, dass** die Kompensation des Offset wiederholt wird, solange der Druck unterhalb des Schwellwerts ($p_s$) liegt und fällt, jedoch nicht bei steigendem Druck.

**23.** Verfahren nach Anspruch 21 oder 22, **dadurch gekennzeichnet, dass** der Schwellwert ($p_s$) nicht grösser als 50 mbar, vorzugsweise nicht grösser als 30 mbar ist.

**24.** Verfahren nach einem der Ansprüche 21 bis 23, **dadurch gekennzeichnet, dass** das Ausgangssignal mindestens dann, wenn das Messergebnis unterhalb des Uebergangswertes oder Uebergangsbereiches liegt, aufgrund des vom Wärmeleitungs-Messelement stammenden zweiten Drucksignals bestimmt wird.

**25.** Verfahren nach einem der Ansprüche 21 bis 24, **dadurch gekennzeichnet, dass** es sich bei der Kammer um eine Schleuse (29) handelt.

**Claims**

**1.** Pressure sensor having a capacitive measuring element which comprises a support plate (5) and a ceramic membrane (6) preceding the same at a distance and connected gas-tight to it, both being provided with electrically conducting layers, **characterized in that** said pressure sensor has a thermal conductivity measuring element with at least one heating element which is connected to the support plate (5) directly or via a base member supporting both measuring elements, where the membrane (6) is shielded from radiation emitted by the at least one heating element.

**2.** Pressure sensor according to Claim 1, **characterized in that** the distance between the membrane (6) and the at least one heating element is not more than 5 mm.

**3.** Pressure sensor according to Claim 1 or 2, **characterized in that** the membrane (6) consists of a ceramic which contains in particular $Al_2O_3$, and its thickness is between 10 μm and 1000 μm, in particular between 10 μm and 250 μm.

**4.** Pressure sensor according to any of Claims 1 to 3, **characterized in that** the diameter of the membrane (6) is between 2 mm and 15 mm, preferably between 4 mm and 9 mm.

**5.** Pressure sensor according to any of Claims 1 to 4, **characterized in that** a gettered reference vacuum (8) is enclosed between the support plate (5) and the membrane (6).

**6.** Pressure sensor according to any of Claims 1 to 5, **characterized in that** each heating element is in the form of a measuring wire (11, 12), a tape, a thin-film arrangement or a microchip.

**7.** Pressure sensor according to any of Claims 1 to 6, **characterized in that** it has at least two heating elements heatable independently of one another.

**8.** Pressure sensor according to any of Claims 1 to 7, **characterized in that** the at least one heating element contains at least 1% of nickel, platinum or tungsten.

**9.** Pressure sensor according to any of Claims 1 to 8, **characterized in that** the at least one heating element is a distance away from and parallel to the support plate (5).

**10.** Pressure sensor according to any of Claims 1 to 9, **characterized in that** the at least one heating element is arranged at a larger distance from the support plate (5) than the latter beside the membrane (6).

**11.** Pressure sensor according to any of Claims 1 to 10, **characterized in that** the shielding of the membrane (6) is ensured by a protective ring (16) which surrounds said membrane and is arranged on the support plate (5) and outside which the at least one heating element is arranged.

**12.** Pressure sensor according to any of Claims 1 to 10, **characterized in that** the at least one heating element is arranged on that side of the support plate (5) which faces away from the membrane (6).

**13.** Pressure sensor according to any of Claims 1 to 12, **characterized in that** the support plate (5) is fastened on a pin (18) which is passed through a base member preferably in the form of a baseplate (17), approximately perpendicularly to said base member.

**14.** Pressure measuring apparatus having a pressure sensor (3) according to any of Claims 1 to 13, **characterized in that** it comprises a protective tube (1) which surrounds the pressure sensor (3).

**15.** Pressure measuring apparatus according to Claim 14, **characterized in that** the protective tube (1) is closed at one end by the support plate (5).

**16.** Pressure measuring apparatus according to Claim 15, **characterized in that** the support plate (5) is suspended in an elastic and sealing manner in the protective tube (1).

**17.** Pressure measuring apparatus according to any of Claims 14 to 16, **characterized in that** the pressure sensor (3) is arranged together with at least one further measuring element for pressure measurement in the protective tube (1).

**18.** Pressure measuring apparatus having a pressure sensor (3) according to any of Claims 1 to 13, **characterized in that** it is arranged together with at least one further pressure measuring element on a common holder.

**19.** Pressure measuring apparatus according to Claim 17 or 18, **characterized in that** the at least one further measuring element is a cold-cathode element.

**20.** Pressure measuring apparatus according to Claim 17 or 18, **characterized in that** the at least one further pressure measuring element is a hot-cathode element, in particular a triode (26) or a Bayard-Alpert element (28).

**21.** Method for monitoring the pressure in a chamber by means of a pressure sensor according to any of Claims 1 to 13 or a pressure measuring apparatus according to any of Claims 14 to 20, **characterized in that** in each case an output signal representing the measured result is generated, which is determined, at least when the measured result is above a transition value or transition range, on the basis of a first pressure signal originating from the capacitive measuring element and, when the pressure falls below a threshold value ($p_s$), in each case any offset of the first pressure signal is compensated in such a way that the determination of the output signal on the basis of the first pressure signal leads to the same result as its determination on the basis of a second pressure signal which originates from the thermal conductivity measuring element.

**22.** Method according to Claim 21, **characterized in that** the compensation of the offset is repeated as long as the pressure is below the threshold value ($p_s$) and is decreasing, but not in the case of increasing pressure.

**23.** Method according to Claim 21 or 22, **characterized in that** the threshold value ($p_s$) is not greater than 50 mbar, preferably not greater than 30 mbar.

**24.** Method according to any of Claims 21 to 23, **characterized in that** the output signal is determined, at least when the measured result is below the transition value or transition range, on the basis of the second pressure signal originating from the thermal conductivity measuring element.

**25.** Method according to any of Claims 21 to 24, **characterized in that** the chamber is a lock (29).

**Revendications**

**1.** Cellule de mesure de pression avec un élément de mesure capacitif, qui comprend une plaque support (5) et une membrane (6), disposée à distance en amont de la plaque, reliée à la plaque de façon étanche au gaz et à base de céramique, lesquelles sont pourvues de couches électroconductrices, **caractérisée en ce qu'**elle présente un élément de mesure à conduction thermique avec au moins un élément de chauffage, qui est relié à la plaque support (5) directement ou par l'intermédiaire d'un corps de base portant les deux éléments de mesure, la membrane (6) étant protégée contre un rayonnement partant du au moins un élément de chauffage.

**2.** Cellule de mesure de pression selon la revendication 1, **caractérisée en ce que** l'espacement entre la membrane (6) et le au moins un élément de chauffage est au plus de 5 mm.

**3.** Cellule de mesure de pression selon la revendication 1 ou 2, **caractérisée en ce que** la membrane (6) est à base d'une céramique qui contient en particulier du $AL_2O_3$, et son épaisseur est comprise entre 10 μm et 1.000 μm, en particulier entre 10 μm et 250 μm.

**4.** Cellule de mesure de pression selon l'une quelconque des revendications 1 à 3, **caractérisée en ce que** le diamètre de la membrane (6) est compris entre 2 mm et 15 mm, de préférence entre 4 mm et 9 mm.

**5.** Cellule de mesure de pression selon l'une quelconque des revendications 1 à 4, **caractérisée en ce qu'**un vide de référence (8) dégazé est inclus entre la plaque support (5) et la membrane (6).

**6.** Cellule de mesure de pression selon l'une quelconque des revendications 1 à 5, **caractérisée en ce que** l'élément de chauffage est conçu respectivement comme un fil de mesure (11, 12), comme une bande, comme un dispositif de film mince ou comme une micro-puce.

**7.** Cellule de mesure de pression selon l'une quelconque des revendications 1 à 6, **caractérisée en ce qu'**elle présente au moins deux éléments de chauffage pouvant chauffer indépendamment l'un de l'autre.

**8.** Cellule de mesure de pression selon l'une quelconque des revendications 1 à 7, **caractérisée en ce que** le au moins un élément de chauffage contient au moins 1 % de nickel, de platine ou de tungstène.

**9.** Cellule de mesure de pression selon l'une quelconque des revendications 1 à 8, **caractérisée en ce que** le au moins un élément de chauffage s'étend à distance parallèlement à la plaque support (5).

10. Cellule de mesure de pression selon l'une quelconque des revendications 1 à 9, **caractérisée en ce que** le au moins un élément de chauffage est disposé à côté de la membrane (6) à une distance de la plaque support (5) supérieure à celle-ci.

11. Cellule de mesure de pression selon l'une quelconque des revendications 1 à 10, **caractérisée en ce que** la membrane (6) est entourée pour le blindage par une bague de protection (16) disposée sur la plaque support (5), bague à l'extérieur de laquelle est disposé le au moins un élément de chauffage.

12. Cellule de mesure de pression selon l'une quelconque des revendications 1 à 10, **caractérisée en ce que** le au moins un élément de chauffage est disposé sur le côté, opposé à la membrane (6), de la plaque support (5).

13. Cellule de mesure de pression selon l'une quelconque des revendications 1 à 12, **caractérisée en ce que** la plaque support (5) est fixée sur une broche (18), qui est guidée par un corps de base conçu de préférence comme plaque de base (17), à peu près perpendiculairement à celui-ci.

14. Dispositif de mesure de pression équipé d'une cellule de mesure de pression (3) selon l'une quelconque des revendications 1 à 13, **caractérisé en ce qu'**il comprend un tuyau de protection (1), qui entoure la cellule de mesure de pression (3).

15. Dispositif de mesure de pression selon la revendication 14, **caractérisé en ce que** le tuyau de protection (1) est fermé sur une extrémité par la plaque support (5).

16. Dispositif de mesure de pression selon la revendication 15, **caractérisé en ce que** la plaque support (5) est suspendue de façon élastique et étanche dans le tuyau de protection (1).

17. Dispositif de mesure de pression selon l'une quelconque des revendications 14 à 16, **caractérisé en ce que** la cellule de mesure de pression (3) est disposée conjointement avec au moins un autre élément de mesure pour la mesure de pression dans le tuyau de protection (1).

18. Dispositif de mesure de pression équipé d'une cellule de mesure de pression (3) selon l'une quelconque des revendications 1 à 13, **caractérisé en ce qu'**il est disposé conjointement avec au moins un autre élément de mesure de pression sur une fixation commune.

19. Dispositif de mesure de pression selon la revendication 17 ou 18, **caractérisé en ce qu'**il s'agit d'un élément de cathode froide en ce qui concerne le au moins un autre élément de mesure.

20. Dispositif de mesure de pression selon la revendication 17 ou 18, **caractérisé en ce que,** en ce qui concerne le au moins un autre élément de mesure de pression, il s'agit d'un élément de cathode incandescente, en particulier d'une triode (26) ou d'un élément de Bayard-Alpert (28).

21. Procédé pour contrôler la pression dans une chambre au moyen d'une cellule de mesure de pression selon l'une quelconque des revendications 1 à 13 ou d'un dispositif de mesure de pression selon l'une quelconque des revendications 14 à 20, **caractérisé en ce que** respectivement un signal de sortie répétant le résultat de la mesure est généré, lequel est déterminé sur la base d'un premier signal de pression provenant de l'élément de mesure capacitif au moins dans les cas où le résultat de la mesure est situé au-dessus d'une valeur de transition ou d'une zone de transition et, lorsque la pression est inférieure à une valeur seuil ($p_s$), un éventuel décalage du premier signal de pression est compensé à chaque fois de telle sorte que le calcul du signal de sortie sur la base du premier signal de pression aboutit au même résultat que son calcul sur la base d'un second signal de pression qui provient de l'élément de mesure à conduction thermique.

22. Procédé selon la revendication 21, **caractérisé en ce que** la compensation du décalage est répétée aussi longtemps que la pression est inférieure à la valeur seuil ($p_s$) et descend, mais pas avec une pression croissante.

23. Procédé selon la revendication 21 ou 22, **caractérisé en ce que** la valeur seuil ($p_s$) n'est pas supérieure à 50 mbars, de préférence pas supérieure à 30 mbars.

**24.** Procédé selon l'une quelconque des revendications 21 à 23, **caractérisé en ce que** le signal de sortie est déterminé sur la base du second signal de pression provenant de l'élément de mesure à conduction thermique au moins dans les cas où le résultat de la mesure se situe au-dessous de la valeur de transition ou de la zone de transition.

**25.** Procédé selon l'une quelconque des revendications 21 à 24, **caractérisé en ce qu'**il s'agit d'un sas (29) en ce qui concerne la chambre.

Fig.1

Fig.2a

Fig.2b

Fig.3a

Fig. 3b

Fig. 3c

Fig.4

Fig.5

Fig.6

Fig. 7

29

30

31

32

33

34

Fig. 8a

p

$P_o$

$p_s$

$P_t$

$I_c$        $I_c$        $I_c$

t

Fig. 8b

p

$P_o$

$P_t$

$I_t$        $I_t$        $I_t$

t